# EUROPÄISCHE PATENTSCHRIFT

(11) **EP 1 775 805 B1**
(45) Veröffentlichungstag und Bekanntmachung des Hinweises auf die Patenterteilung: **20.04.2011**
(21) Anmeldenummer: 06405418.2
(22) Anmeldetag: 03.10.2006
(51) Int. Cl.: H01S 3/13

(54) **Frequenzstabilisierter Gaslaser**
Frequency Stabilised Gaslaser
Laser à Gas stabilisé en Fréquence

(30) Priorität: 14.10.2005 CH 16652005
(43) Veröffentlichungstag der Anmeldung: 18.04.2007
(73) Patentinhaber: Leica Geosystems AG, 9435 Heerbrugg (CH)
(72) Erfinder: Meier, Dietrich, 5015 Niedererlinsbach (CH)
(74) Vertreter: Frei Patent Attorneys

(56) Entgegenhaltungen:
- WO-A-88/01799
- GB-A- 2 331 177
- US-A- 5 617 440
- US-B1- 6 434 176

## Beschreibung

Die Erfindung bezieht sich auf das Gebiet der Frequenzstabilisierung von Gaslasern, insbesondere auf einen frequenzstabilisierten Gaslaser und ein Verfahren zur Frequenzstabilisierung eines Gaslasers gemäss dem Oberbegriff der entsprechenden unabhängigen Patentansprüche.

### STAND DER TECHNIK

Für interferometrische Messungen mittels Laserlicht muss die Wellenlänge respektive die Frequenz des Laserlichtes möglichst konstant gehalten werden. Eine dazu verwendete Frequenzstabilisierung ist beispielsweise aus US 5,617,440 bekannt. Darin wird eine Vorrichtung zum Heizen und Kühlen eines zylindrischen Laserrohrs eines Gasentladungslasers für interferometrische Messungen beschrieben: Mittels Peltier-Elementen wird die Temperatur des Laserrohrs auf einer konstanten Temperatur gehalten, so dass auch der Abstand zwischen den Spiegeln am Ende der Röhre konstant bleibt. Das dabei verwendete Regelverfahren ist ferner auch beschrieben in "Frequency Stabilization of Internal-Mirror Helium-Neon Lasers", R. Balhorn, H. Kunzmann, F. Lebowsky, Applied Optics Vol. 11, No. 4, April 1972.

GB-A-2 331 177 beschriebt eine Stabilisierung der Wellenlänge eines Lasers. Hier wird das thermische Gleichgewicht des Lasers bestimmt, indem der Laser aufgeheizt wird und die Ausdehnung des Laser-Resonators gemessen wird. Dazu liegt eine geregelte Heizung vor, welche die Temperatur in einem Gehäuse regelt, welcher den Laser-Resonator umschliesst. Sobald die Ausdehnungsgeschwindigkeit sehr langsam wird, also einen vorgegebenen Wert unterschreitet, wird angenommen, dass ein Gleichgewicht erreicht ist. Darauf wird eine Regelung zur Längenstabilisierung und damit auch der Wellenlänge eingeschaltet. Diese Regelung misst die Intensität von mindestens einer Komponente des abgestrahlten Laserlichtes und stellt eine Rohrtemperatur des Laserrohres so ein, dass die gemessene Intensität auf einen vorgegebenen Sollwert geregelt wird

WO 88/01799 A betrifft eine Temperatursteuerung des Aufheizens anhand der Intensitäten von orthogonal zueinander polarisierten Moden in einem Laser. Es wird explizite darauf hingewiesen, dass keine Temperaturmessungen erforderlich sind.

### DARSTELLUNG DER ERFINDUNG

Es ist Aufgabe der Erfindung, einen frequenzstabilisierten Gaslaser und ein Verfahren zur Frequenzstabilisierung eines Gaslasers der eingangs genannten Art zu schaffen, welche den gesamten Energieverbrauch des Lasers reduzieren. Eine weitere Aufgabe der Erfindung ist es, die Inbetriebnahmezeit für den Gaslaser zu reduzieren. Eine weitere Aufgabe der Erfindung ist, thermische Belastungen, insbesondere Wechselbelastungen, des Lasers und dessen Halterung zu minimieren.

Diese Aufgabe lösen ein frequenzstabilisierter Gaslaser und ein Verfahren zur Frequenzstabilisierung eines Gaslasers mit den Merkmalen der entsprechenden unabhängigen Patentansprüche.

Das Verfahren zur Frequenzstabilisierung eines Gaslasers mit einem Laserrohr, insbesondere zum Betrieb in einem Laser-Interferometer, weist also im stabilen Betrieb eine Dauerbetriebsregelung mit den folgenden Schritten auf:
- Betreiben des Gaslasers zum Abstrahlen von Laserlicht;
- Messen einer Intensität von mindestens einer Komponente des abgestrahlten Laserlichtes;
- Einstellen einer Rohrtemperatur des Laserrohres, so dass die gemessene Intensität auf einen vorgegebenen Sollwert geregelt wird;
wobei das Verfahren bei Inbetriebnahme des Gaslasers, d.h. vor dem stabilen Betrieb, eine Inbetriebnahmeregelung mit den folgenden Schritten aufweist:
- Messen einer Umgebungstemperatur;
- Regeln des Zustandes des Laserrohres zumindest annähernd auf einen Sollzustand, wobei der Sollzustand einer Temperatur des Laserrohres bei der gemessenen Umgebungstemperatur im eingeschwungenen Zustand ohne weitere Heizung oder Kühlung entspricht; und
- Umschalten auf die Dauerbetriebsregelung.

Der Sollzustand wird also derart gewählt, dass er dem Zustand, wie er sich nach längerer Zeit im Dauerbetrieb des Gaslasers ohne besondere Heizung oder Kühlung einstellen würde, möglichst gut entspricht. In diesem Zustand wird das Laserrohr lediglich durch die Verlustleistung des Lasers aufgeheizt. Es stellt sich, in Abhängigkeit von der Umgebungstemperatur, ein Gleichgewichtszustand ein, in welchem die Temperatur des Laserrohres etwas über der Umgebungstemperatur liegt. Mit der Wahl dieses Zustandes als Sollzustandes wird im Dauerbetrieb des Gaslasers sehr wenig Energie zum Konstanthalten der Röhrentemperatur verwendet.

Dies ist im Gegensatz zu bekannten Regelungen, bei welchen die Röhrentemperatur auf einem fix vorgegebenen Wert konstant gehalten wird. Typischerweise liegt dieser Wert signifikant über der Umgebungstemperatur, so dass die Röhre dauernd geheizt werden muss. Entsprechend gross ist die benötigte Heizleistung und auch die thermische Wechselbelastung des Lasers und dessen Halterung .

In diesem Zusammenhang bezeichnet der Begriff "Umgebungstemperatur" die Temperatur ausserhalb des Messgerätes, also ausserhalb von fest mit dem Laserrohr verbundenen Gehäuseteilen. Typischerweise ist dies die Temperatur in einem Raum, in welchem das Messgerät eingesetzt wird.

Da die Endtemperatur des Systems bekannt ist, kann die Regelung diese Temperatur gezielt anfahren und somit wesentlich schneller erreichen als durch das asymptotische Heranfahren an die Endtemperatur gemäss dem Stand der Technik.

Vorzugsweise weist die Inbetriebnahmeregelung die folgenden Schritte auf:
- Messen der Umgebungstemperatur;
- Messen der Rohrtemperatur des Laserrohres;
- Bestimmung eines Regeldifferenzwertes nach Massgabe der Umgebungstemperatur und der Rohrtemperatur;
- Einstellen der Temperatur des Gaslasers, so dass der Regeldifferenzwert zumindest annähernd auf Null geregelt wird;
- Umschalten auf die Dauerbetriebsregelung.

Das Einstellen der Temperatur des Gaslasers zur Ausregelung des Regeldifferenzwertes wird also iterativ wiederholt, bis die Regelabweichung respektive der Differenzwert ausreichend klein ist, oder bis die Variation des Regeldifferenzwertes in einem Zeitfenster vorgegebener Länge unter einer vorgegebenen Grenze liegt.

In einer ersten bevorzugten Variante des Verfahrens ist der Regeldifferenzwert eine Anzahl von Modi des Gaslasers. Diese Variante beruht auf der Erkenntnis, dass das abgestrahlte Laserlicht bei einer Temperaturänderung und damit einer Längenänderung des Laserrohres mehrere Schwingungsmodi durchläuft, und dass die Temperaturänderung zwischen der aktuellen Rohrtemperatur und der Temperatur im Sollzustand somit einer bestimmten Anzahl von durchlaufenen Moden entspricht. Um somit das Laserrohr in den Sollzustand zu bringen, wird es aufgeheizt und werden die durchlaufenen Moden während des Aufheizens gezählt. Da das Laserrohr und sein Gehäuse eine bestimmte Verzögerung der Wärmeverteilung bewirken, wird die Aufheizleistung reduziert oder ganz mit dem Aufheizen bereits aufgehört, bevor die gesamte Anzahl zu durchlaufender Moden erreicht ist.

Vorzugsweise wird nach einer ersten Anzahl von durchlaufenen Moden mit dem Heizen mit maximaler Leistung aufgehört, und dann während einer zweiten Anzahl von Moden nur mit reduzierter Heizleistung geheizt oder mit voller oder reduzierter Leistung gekühlt, so das insgesamt die Röhre und die wärmeleitend mit der Röhre verbundenen Elemente insgesamt zeitoptimal die Zieltemperatur entsprechend dem Sollzustand erreichen. Um sowohl heizen als auch kühlen können, werden dazu vorzugsweise Peltier-Elemente eingesetzt.

Die erste und zweite Anzahl von Moden für einen zeitoptimalen Temperaturverlauf können experimentell und/oder durch Modellrechnungen der Wärmeverteilung im System bestimmt werden. In einer einfachen bevorzugten Ausführungsform der Erfindung wird die gesamte Anzahl von zu durchlaufenden Moden experimentell bestimmt. Dabei wird das gesamte System zuerst auf eine bestimmte Umgebungstemperatur gebracht; d.h. dass eine Temperatur des Laserrohres und seines Gehäuses gleich der Umgebungstemperatur ist. Dann wird der Laser ohne Kühlung oder zusätzliche Heizung betrieben, bis sich die Temperatur des Laserrohres auf einem konstanten Wert stabilisiert hat. Dies dauert beispielsweise 20 bis 30 Minuten. Während des Aufheizens wird die Anzahl durchlaufener Modi gezählt. Damit ist die Anzahl zu durchlaufender Modi für diese Umgebungstemperatur bekannt, ebenso die Zieltemperatur des Laserrohres. Es ist für eine Röhre bekannt respektive messbar, wie viele Modi bei einer Temperaturänderung von einem Grad Celsius durchlaufen werden. Dieser Temperaturfaktor F beträgt typischerweise zwischen 2 und 3 Moden pro °C.

Für kombiniertes Aufheizen, Heizen mit reduzierter Leistung oder Kühlen wird die erste und die zweite Anzahl der Modi empirisch aufgrund eines festen Verhältnisses oder durch Simulationen oder durch Experimente ermittelt. Ein Beispiel für solche festen Verhältnisse ist z.B. (wobei jeweils die Ergebnisse auf ganzzahlige Werte gerundet werden):
1.95% der Anzahl Modi zum Aufheizen (insbesondere mit maximaler Leistung),
2.5% zum Heizen mit reduzierter Leistung oder zum Kühlen.

Anschliessend an Schritt 2 oder bereits nach Schritt 1 wird der Regler auf die Modenregelung entsprechend der Dauerbetriebsregelung umgeschaltet. Dadurch wird durch Heizen und/oder Kühlen der verbleibende Regelfehler in der optischen Lichtleistung ausgeglichen und anschliessend möglichst konstant gehalten.

In einer bevorzugten Ausführungsform der Erfindung werden die gesamte Anzahl von zu durchlaufenden Moden und somit auch erste und/oder zweite Anzahl anhand von Messungen der Rohrtemperatur angepasst. Damit kann ein teilweise aufgewärmter Zustand nach einer Betriebsunterbrechung berücksichtigt werden. D.h. falls die Differenz zwischen der Rohrtemperatur und der Umgebungstemperatur zu Beginn der Inbetriebnahmeregelung eine vorgegebene Schwelle überschreitet, wird die Anzahl von zu durchlaufenden Moden nach Massgabe dieser Differenz vermindert. Dies kann beispielsweise in folgender Weise geschehen: Es ist für eine Röhre bekannt respektive messbar, wie viele Modi bei einer Temperaturänderung von einem Grad Celsius durchlaufen werden. Dieser Temperaturfaktor F beträgt typischerweise zwischen 2 und 3 Moden pro °C. Wenn also die Differenz zwischen der Rohrtemperatur und der Umgebungstemperatur dT beträgt, so wird vorzugsweise die gesamte Anzahl von zu durchlaufenden Modi um dT.F (auf eine ganze Zahl gerundet) verringert.

Die Abhängigkeit der Anzahl von zu durchlaufenden Moden von den beiden Variablen Umgebungstemperatur und Rohrtemperatur lässt sich auch funktional äquivalent darstellen und reproduzieren. So können beispielsweise zweidimensionale Tabellen (Arrays), Polynomapproximation oder eine Kombination davon verwendet werden. In einer aufwendigeren Regelung kann auch die Temperatur des Ofens mit berücksichtigt werden.

In einer zweiten Variante des Verfahrens ist der Regeldifferenzwert eine Temperaturdifferenz und ist gleich der Differenz zwischen der gemessenen Rohrtemperatur und der Temperatur des Laserrohres im Sollzustand. Die Temperatur des Laserrohres im Sollzustand wird wie oben beschrieben beispielsweise experimentell ermittelt. Die Rohrtemperatur wird anhand von Messungen der Rohrtemperatur und optional auch anhand von Messungen der Ofentemperatur auf den Sollwert geregelt. Sobald der Sollwert annähernd erreicht ist oder sich während einer vorgegebene Zeitdauer nicht mehr ändert, wird der Regler auf die Modenregelung entsprechend der Dauerbetriebsregelung umgeschaltet.

In einer weiteren bevorzugten Ausführungsform der Erfindung wird während des Betriebes überwacht, ob das Gerät im stationären Zustand tatsächlich nur minimal geheizt oder gekühlt wird. Es kann aufgrund von Modellabweichungen oder insbesondere bei längerem Betrieb aufgrund einer Änderung der Umgebungstemperatur geschehen, dass sich eine dauernde Kühlung oder Heizung einstellt. Dies wird detektiert, falls nach dem Einschalten und dem Betrieb der Modenregelung im stabilisierten Zustand der Peltier-Strom respektive die Kühl- oder Heizleistung der Peltier-Elemente eine vorgegebene Schwelle überschreitet. Falls dies geschieht, wird der Benutzer angefragt, ob eine Neueinstellung der Regelung vorgenommen werden darf. Dies ist nötig, da während einer Neueinstellung keine Messungen mit dem Interferometer vorgenommen werden können. Falls eine Neueinstellung vorgenommen werden darf, so wird die Anzahl von zu durchlaufenden Moden beispielsweise wie weiter oben beschrieben unter Berücksichtigung der Rohrtemperatur bestimmt.

Der frequenzstabilisierte Gaslaser, insbesondere zur Verwendung in einem Laser-Interferometer, weist also auf:
- ein Laserrohr zum Abstrahlen von Laserlicht,
- einen Detektor zur Messen einer Intensität von mindestens einer Komponente des abgestrahlten Laserlichtes, und
- eine Regelung, welche in einem ersten Betriebszustand als Dauerbetriebsregelung ausgebildet ist, bei welcher Dauerbetriebsregelung zur Einstellung einer Rohrtemperatur des Laserrohres die gemessene Intensität auf einen vorgegebenen Sollwert geregelt wird,
- einen Umgebungstemperatursensor, und
- eine Vorgabeeinheit zur Bestimmung eines Sollzustandes, wobei der Sollzustand einer Temperatur des Laserrohres bei der gemessenen Umgebungstemperatur im eingeschwungenen Zustand ohne weitere Heizung oder Kühlung entspricht,
- wobei die Regelung in einem zweiten Betriebszustand als Inbetriebnahmeregelung ausgebildet ist, bei welcher Inbetriebnahmeregelung der Zustand des Laserrohres zumindest annähernd auf diesen Sollzustand geregelt wird, und anschliessend auf die Dauerbetriebsregelung umgeschaltet wird.

Vorzugsweise weist der Gaslaser für Neustarts, bei welchen die Röhre nicht auf die Umgebungstempteratur abgekühlt ist, z.B. nach kurzen Betriebsunterbrüchen, ferner einen Rohrtemperatursensor auf, wobei die Vorgabeeinheit zur Bestimmung eines Regeldifferenzwertes nach Massgabe der Umgebungstemperatur und der Rohrtemperatur ausgebildet ist, und die Regelung im zweiten Betriebszustand zur Einstellung der Temperatur des Gaslasers, so dass der Regeldifferenzwert zumindest annähernd auf Null geregelt wird, ausgebildet ist.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: einen Aufbau eines Gaslasers mit einer Regelung zur Frequenzstabilisierung gemäss der Erfindung;
- Figur 2: eine Verstärkungskurve zur Veranschaulichung des Prinzips der Wellenlängenstabilisierung;
- Figuren 3 und 4: beispielhafte Verläufe von Temperaturen und Lichtintensitäten beim Ablauf des Verfahrens zur Frequenzstabilisierung; und
- Figur 5: ein Flussdiagramm des Verfahrens.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

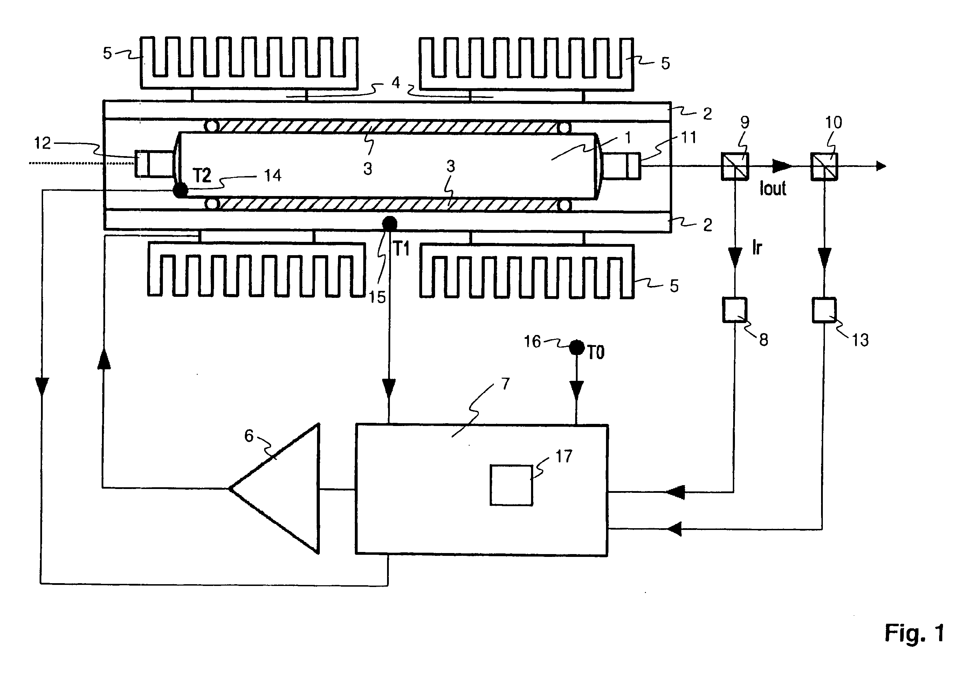

**Figur 1** zeigt einen Aufbau eines Gaslasers mit einer Regelung zur Frequenzstabilisierung gemäss der Erfindung. Ein Laserrohr 1, beispielsweise ein HeNe-Laser, ist in einem Metallrohr oder Metallgehäuse 2, auch Ofen genannt, untergebracht. Ein Zwischenraum zwischen dem Laserrohr 1 und dem Metallgehäuse 2 ist mit einer wärmeleitenden Paste 3 aufgefüllt. Am Metallgehäuse 2 sind Peltier-Elemente 4 zum Heizen oder Kühlen des Metallgehäuses 2 angebracht. Die Peltier-Elemente 4 werden über einen Leistungsverstärker 6 entsprechend einem Ausgang eines Reglers 7 angesteuert. Zur Abstrahlung respektive Aufnahme der durch die Peltier-Elemente 4 transportierten Wärme weisen diese Peltier-Kühlelemente 5 auf. Das Laserrohr 1 weist einen hinteren Spiegel 12 und einen vorderen Spiegel 11 auf, wobei der Hauptanteil des abgestrahlten Laserlichtes das Laserrohr 1 über den vorderen Spiegel 11 verlässt.

Um die Frequenz- und Wellenlänge stabilisieren zu können ist im Strahlengang dieses abgestrahlten Lichtes ein Polarisationsteiler 9 angeordnet, welcher Licht Iout in einer ersten Polarisationsrichtung durchlässt und Licht Ir in einer zweiten, dazu orthogonalen Polarisationsrichtung ablenkt und auf eine Detektionsdiode 8 leitet. Vom durchgelassenen Licht Iout wird in einem optionalen Strahlteiler 10 ein Anteil, beispielsweise 10%, abgezweigt, und auf eine zweite Detektionsdiode 13 geführt. Mit der zweiten Detektionsdiode 13 ist somit eine Messung des Absolutwertes des abgestrahlten Laserlichtes möglich. In einer anderen Ausführungsform der Erfindung sind die Detektionsdiode 8 und/oder die zweite Detektionsdiode 13 an der anderen Seite des Laserrohres 1 angeordnet und erfassen Licht, das durch den hintere Spiegel 12 abgestrahlt wird.

Die Regelung 7 ist zum Erfassen von Temperaturen mittels eines Rohrtemperatursensors 14, eines optionalen Ofentemperatursensors 15 und eines Umgebungstemperatursensors 16 ausgebildet.

Die Regelung 7 ist zur Frequenzstabilisierung des Lasers ausgebildet. Dazu weist sie zwei Betriebsmodi auf:
- Ein erster Betriebsmodus ist eine Dauerbetriebsregelung oder Modenregelung gemäss den eingangs erwähnten Referenzen. Dabei wird die Heizung respektive Kühlung des Laserrohres 1 mittels der Peltier-Elemente 4 entsprechend der durch die Detektionsdiode 8 gemessenen Intensität geregelt.
- Ein zweiter Betriebsmodus ist eine Inbetriebnahmeregelung. Dabei wird das Aufheizen des Systems bestehend aus Laserrohr 1, Metallgehäuse 2, wärmeleitender Paste 3 und Peltier-Elementen 4 entsprechend den Temperaturen des Umgebungstemperatursensors 16, des Rohrtemperatursensors 14 und eventuell des Ofentemperatursensors 15 gesteuert oder geregelt. Dabei wird das Aufheizen entsprechend der durch die Detektionsdiode 8 gemessenen Intensität und einer daraus abgeleiteten Modenzählung gesteuert oder geregelt.

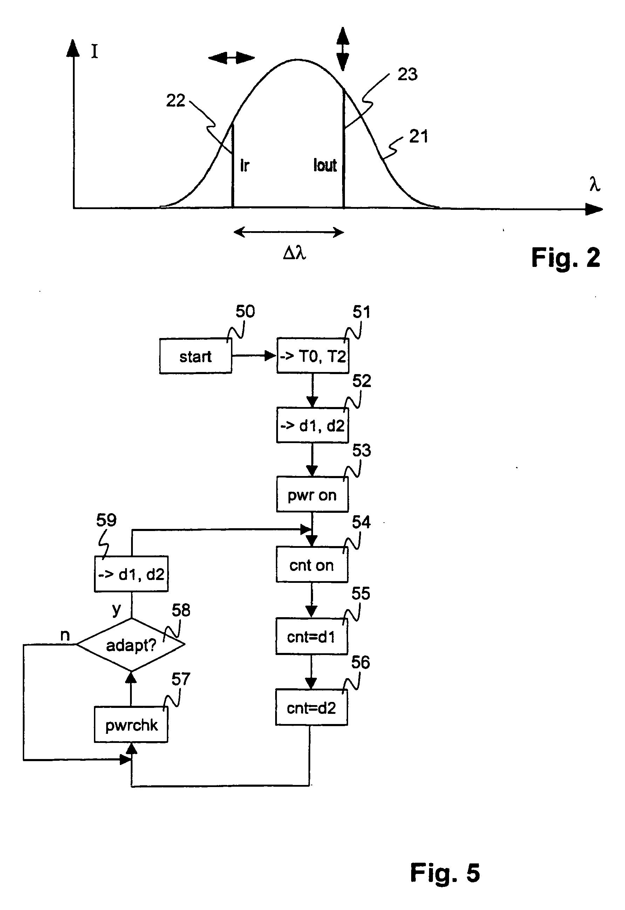

Der erste Betriebsmodus ist im Folgenden der Vollständigkeit halber kurz erklärt. **Figur 2** zeigt eine Verstärkungskurve 21 zur Veranschaulichung des Prinzips der Wellenlängenstabilisierung durch die Modenregelung. Die Verstärkungskurve gibt die Intensität I des vom Laser abgestrahlten Lichtes in Funktion von dessen Wellenlänge λ wieder. Der Schwerpunkt der Verstärkungskurve 21 liegt bei der Eigenfrequenz des verwendeten Lasers. Entsprechend der Länge des Laserrohres 1 respektive dem Spiegelabstand stellen sich linear polarisierte Schwingungsmodi 22, 23 ein. Zwei nebeneinander liegende Schwingungsmodi schwingen jeweils senkrecht zueinander. Dies ist in der **Figur 2** durch Doppelpfeile oberhalb der Schwingungsmodi 22, 23 angedeutet. Die Frequenzen respektive Wellenlängen von nebeneinander liegenden Schwingungsmodi 22, 23 unterscheiden sich um einen festen Frequenzbetrag respektive um einen Wellenlängenbetrag Δλ, der wiederum eine Funktion der Länge des Laserrohres 1 ist. Die Amplitude der einzelnen Modi 22, 23 ist durch die Verstärkungskurve 21 gegeben. In **Figur 2** ist dies am Beispiel eines relativ kurzen Laserrohres 1 dargestellt, bei dem nur zwei Moden 22, 23 unter der Verstärkungskurve des Lasers auftreten. Beide Longitudinal-Moden 22, 23 haben eine geringfügig unterschiedliche Wellenlänge, von der nur eine für interferometrische Messungen verwendet werden soll. Mit dem polarisierenden Strahlteiler 9 am Ausgang und ausserhalb des Laserrohres 1 wird das Licht der beiden Moden 22, 23 getrennt. Die Intensität Ir des um 90 Grad abgelenkten Strahlanteiles wird gemessen, A/D- gewandelt und über die Regelung 7 zur Steuerung des Regelstromes der Peltier-Elemente 4 verwendet. Die Regelung 7 ist so ausgelegt, dass die ausgekoppelte Lichtintensität Ir konstant auf einem Sollwert gehalten wird. Dabei wird über die Betriebstemperatur des Gehäuses 2 die Länge des Laserrohres 1 geregelt, und werden damit die Moden 22, 23 unterhalb der Verstärkungskurve des Lasers verschoben. Der Sollwert ist beispielsweise so gewählt, dass die Intensität des ausgekoppelten Lichtanteils Ir wesentlich geringer als die des Nutzlichtanteils Iout ist. Beispielsweise wird der ausgekoppelte Lichtanteil Ir auf einen Wert geregelt, der einem Fünftel bis der Hälfte des Nutzlichtanteiles Iout entspricht. Der Sollwert, auf welchen der ausgekoppelte Lichtanteil geregelt wird, ist fest vorgegeben. Damit wird die Lage des ausgekoppelten Modes 22 bezüglich der Verstärkungskurve stabilisiert, und dadurch indirekt auch die Lage des Modes 23 des Nutzlichtanteiles.

Um den Fall zu berücksichtigen, dass sich die Verstärkungskurve 21 durch Alterung senkt, kann auch die Intensität des Nutzlichtanteiles Iout mittels des Strahlteilers 10 und der zweiten Detektionsdiode 13 gemessen werden. Ein Absinken dieser Intensität Iout zeigt an, dass die Verstärkungskurve 21 tiefer liegt als ursprünglich. Somit würde bei Regelung des ausgekoppelten Lichtanteils Ir auf eine konstante Intensität gemäss dem Sollwert eine zu hohe Wellenlänge eingestellt. Um wieder die ursprüngliche Wellenlänge aller Lichtanteile zu erreichen, wird der Sollwert entsprechend abgesenkt.

Bei einer Temperaturerhöhung verschiebt sich jeder der Moden nach rechts, nimmt zuerst an Intensität zu und dann wieder ab. Da aufeinander folgende Modi senkrecht zueinander polarisiert sind, variiert die Intensität des Nutzlichtsignales Iout und gegenphasig dazu (d.h. mit einem Phasenunterschied von 180°) die Intensität Ir des ausgekoppelten Lichtanteils. Die Anzahl durchlaufener Extrema, also Maxima oder Minima, des ausgekoppelten Lichtanteils Ir ist somit gleich der Anzahl durchlaufener Modi. Dabei ist es Konventionssache, ob die Anzahl Modi in nur einer Polarisationsrichtung oder die Anzahl Modi in beiden Polarisationsrichtungen gezählt wird - der letztere Wert ist immer das Doppelte des ersteren Wertes.

Eine Vorrichtung zum Zählen einer Anzahl durchlaufener Modi bestimmt also bei einem periodisch variierenden Signal die Anzahl der Extrema. Aus praktischen Gründen werden vorzugsweise nur Extrema gezählt, welche einen vorgegebenen absoluten Schwellwert überschreiten, und/oder eine vorgegebene Differenz zum letzten Extremum mit umgekehrtem Vorzeichen aufweisen.

Gemäss der Erfindung wird bei der Inbetriebnahme die Umgebungstemperatur T0 mittels des Umgebungstemperatursensors 16 gemessen. In einer ersten bevorzugten Ausführungsform der Erfindung wird durch eine Vorgabeeinheit 17 aus der Umgebungstemperatur T0 aus einer Tabelle oder entsprechend einer Polynomapproximation eine dazugehörige Gesamtanzahl von zu durchlaufenden Modi bestimmt. Falls die Rohrtemperatur T2 im Wesentlichen gleich der Umgebungstemperatur T0 ist, bleibt diese Gesamtanzahl unverändert.

Falls die zu Beginn der Inbetriebnahmeregelung die Rohrtemperatur höher als die Umgebungstemperatur T0 ist, hat sich das Laserrohr 1 nach einer früheren Betriebsphase noch nicht auf die Umgebungstemperatur T0 abgekühlt. Somit wird die Gesamtanzahl von zu durchlaufenden Modi entsprechend der Differenz zwischen der Rohrtemperatur T2 und der Umgebungstemperatur T0 reduziert.

Nun wird die Heizung des Metallgehäuses 2 über die Peltier-Elemente 4 mit möglichst hoher Heizleistung betrieben. Dabei kann der Ofen respektive das Metallgehäuse 2 kurzzeitig überhitzt werden, da die Wärme sich im Folgenden wieder über den Rest des Systems verteilt. Während dem Aufheizen des Laserrohres 1 werden die durchlaufenen Modi gezählt. Sobald die Anzahl durchlaufener Modi eine vorgegebene Anzahl erreicht, die beispielsweise, ein oder zwei oder drei Modi unter der Gesamtanzahl von zu durchlaufenden Modi liegt, wird die Heizung reduziert oder ganz abgeschaltet. Es ist grundsätzlich auch möglich, die Peltier-Elemente 4 umzupolen und auf maximale oder reduzierte Kühlleistung bezüglich des Metallgehäuses 2 zu betreiben. Nach Durchlaufen einer zweiten Anzahl von Modi wird die Regelung auf die oben beschriebene Modenregelung umgeschaltet.

Vorzugsweise wird die Heizleistung während der letzten ein oder zwei Moden auf etwa ein Viertel reduziert. Dann kann die Modenregelung sich innerhalb eines einzigen Modus stabilisieren.

Es ist auch möglich, die Umschaltung spätestens nach einer vorgegebenen Zeit vorzunehmen, oder falls die Temperatur während eines mitlaufenden Zeitfensters vorgegebener Länge ein Band mit einer vorgegebenen Breite nicht verlässt.

Die Röhre 1 befindet sich nun in einem Zustand, der nahe dem Zustand ist, in welchem sich die Röhre 1 bei der herrschenden Umgebungstemperatur nur aufgrund ihrer Verlustleistung befinden würde. Der Heiz- respektive Kühlaufwand der Modenregelung ist somit minimal.

Im Inbetriebnahmemodus kann, anstelle der oben beschriebenen Umschaltung entsprechend der Anzahl durchlaufener Modi, die Regelung auch als PID-Regler oder Zustandsregler oder modellbasierter Regler etc. ausgeführt sein, welcher die Heizung respektive Kühlung so ansteuert, dass einerseits die Gesamtanzahl von zu durchlaufenden Modi möglichst rasch durchlaufen wird und andererseits nach Erreichen dieser Gesamtanzahl die Temperatur möglichst stabil bleibt.

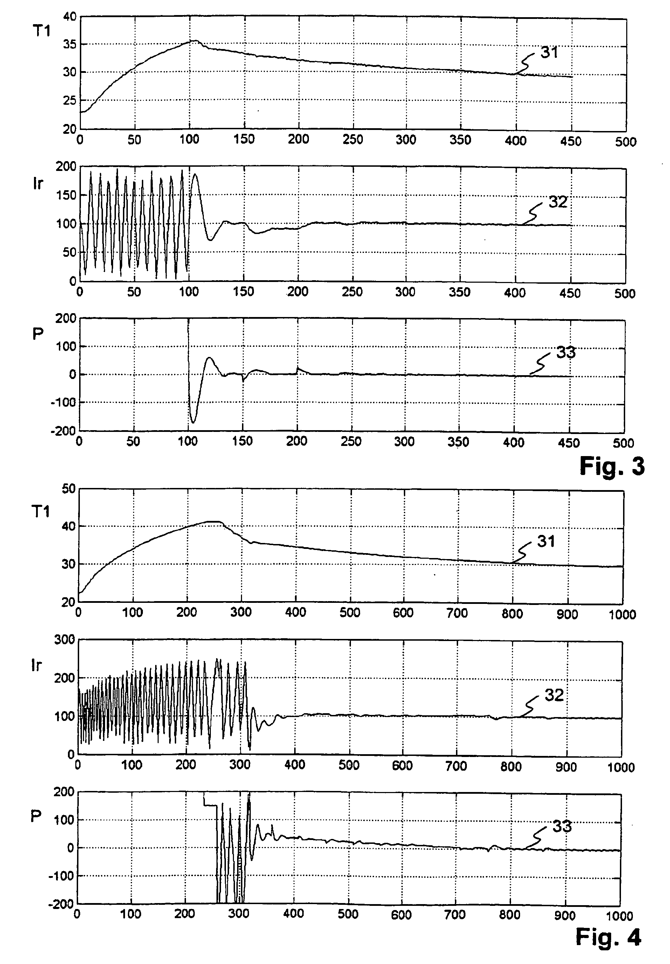

**Figuren 3** und **4** zeigen beispielhafte Verläufe von Temperaturen und Lichtintensitäten beim Ablauf des Verfahrens zur Frequenzstabilisierung. Dabei zeigen der oberste Verlauf 31 die Temperatur T1 des Metallgehäuses 2, und der mittlere Verlauf 32 die Intensität Ir des mit der Detektionsdiode 8 erfassten ausgekoppelten Lichtes. Der untere Verlauf 33 zeigt die Leistungsaufnahme P der Peltier-Elemente 4, wobei positive Werte einem Aufheizen des Metallgehäuses 2 und negative Werte einer Abkühlung des Metallgehäuses 2 entsprechen. Die Zahlenwerte auf der Abszisse entsprechen der Anzahl von Messpunkten, wobei in der **Figur 3** 150 Messpunkte 75 Sekunden und in der **Figur 4** 300 Messpunkte einer Zeitdauer von 150 Sekunden entsprechen.

In der **Figur 3** ist dargestellt, wie nach 11 Modi etwa beim 100. Messpunkt die Peltier-Elemente 4 von der Inbetriebnahmeregelung auf die Dauerbetriebsregelung umschalten. Die Ofentemperatur T1 des vorübergehend überheizten Metallgehäuses 2 nimmt darauf ab und nähert sich asymptotisch einer Endtemperatur von etwas unter 30°C. Die Rohrtemperatur T2 ist nicht eingezeichnet, an den Werten der Intensitätsmessung Ir und der Leistungsabgabe P ist aber ersichtlich, dass bereits bei Messpunkt 220 der Zustand im Wesentlichen eingeschwungen ist.

Die **Figur 4** zeigt, wie nach 28 Modi, etwa beim 230. Messpunkt die Heizleistung während eines Modes reduziert wird und dann auf Dauerregelung umgeschaltet wird. Hier ist die Regelung nach ca. dem 400. Messpunkt eingeschwungen. Dabei ist aber die Reduktion der Heizleistung - während nur einer Periode - noch nicht ausreichend, was dazu führt, dass nach dem Umschalten in den Dauerbetriebsmodus noch drei weitere Modi überfahren werden. Dies ist aber ohne wesentlichen Einfluss auf die Peltierleistung im eingeschwungenen Zustand.

In einer zweiten bevorzugten Ausführungsform der Erfindung wird durch die Vorgabeeinheit 17 aus der Umgebungstemperatur aus einer Tabelle oder entsprechend einer Polynomapproximation eine dazugehörige Solltemperatur für die Rohrtemperatur bestimmt. Darauf wird die Rohrtemperatur durch die Regelung 7 auf diese Solltemperatur geregelt, wobei die gemessene Rohrtemperatur und optional auch die gemessene Ofentemperatur als Istwerte respektive Messgrössen für die Regelung verwendet werden. Für die vorzugsweise zeitoptimale Regelung kann eine PID-Regelung, Zustandsregelung, modellbasierte Regelung etc. eingesetzt werden.

**Figur 5** zeigt ein Flussdiagramm des Verfahrens zur Frequenzstabilisierung: Nach einem Start 50 wird in einem ersten Schritt 51 "-> T0, T2" die Messung der Umgebungstemperatur T0 und allenfalls der Rohrtemperatur T2 und eventuell der Ofentemperatur T1 durchgeführt. In einem nachfolgenden zweiten Schritt 52 "-> d1, d2" wird daraus der Regeldifferenzwert berechnet. Hier ist dies ein erster Wert d1 für die Anzahl Modi, während der geheizt werden soll, und ein zweiter Wert d2 für die Anzahl Modi, während der reduziert geheizt oder gekühlt werden soll. In einem nachfolgenden dritten Schritt 53 "pwr on" werden das Laserrohr 1 und die Peltier-Elemente 4 in Betrieb genommen respektive mit Energie versorgt.

In einem nachfolgenden vierten Schritt 54 "cnt on" wird der Modenzähler gestartet und zählt die beim Aufheizen durchlaufenen Moden. In einem nachfolgenden fünften Schritt 55 "cnt=d1" erfasst ein Komparator, sobald die Anzahl durchlaufener Moden den ersten Wert d1 überschreitet, und reduziert in diesem Fall die Heizleistung oder aktiviert die Kühlung. In einem nachfolgenden sechsten Schritt 56 "cn=d2" erfasst ein Komparator, sobald die Anzahl durchlaufener Moden den zweiten Wert d2 überschreitet, und schaltet in diesem Fall auf die Modenregelung oder Dauerregelung um.

Falls das System nicht abgeschaltet wird, wird in einem in einem nachfolgenden siebten Schritt 57 "pwrchk" wiederholt überprüft, ob die Leistung der Peltier-Elemente 4 einen vorgegebenen Schwellwert überschreitet. Falls dies der Fall ist, hat sich die Umgebungstemperatur geändert, oder der stationäre Betriebszustand bei der Umgebungstemperatur ist nicht mehr derselbe wie bei der ursprünglichen Bestimmung von d1 und d2. Um einen weiterhin möglichst energiesparenden Betrieb zu ermöglichen, wird in einer nachfolgenden Verzweigung 58 "adapt?" einem Benutzer der Vorschlag zu einer manuell auslösbaren Adaption gemacht, und es wird die Eingabe des Benutzers geprüft. Falls er mit der Adaption einverstanden ist, werden im nachfolgenden neunten Schritt 59 "-> d1, d2" die Werte für d1 und d2 neu berechnet. Anschliessend wird mit dem vierten Schritt 54 mit den neuen Werten von d1 und d2 weitergefahren. Während der erneuten Einstellung gemäss den Schritten 54 bis 56 können keine interferometrischen Messungen durchgeführt werden.

### BEZUGSZEICHENLISTE

- 1: Laserrohr
- 2: Metallgehäuse
- 3: wärmeleitende Paste
- 4: Peltier-Element
- 5: Peltier-Kühlelement
- 6: Leistungsverstärker
- 7: Regelung
- 8: Detektionsdiode
- 9: Polarisationsteiler
- 10: Strahlteiler
- 11: vorderer Spiegel
- 12: hinterer Spiegel
- 13: zweite Detektionsdiode
- 14: Rohrtemperatursensor
- 15: Ofentemperatursensor
- 16: Umgebungstemperatursensor
- 17: Vorgabeeinheit

## Patentansprüche

1. **Verfahren zur Frequenzstabilisierung eines Gaslasers** mit einem Laserrohr (1), insbesondere zum Betrieb in einem Laser-Interferometer, welches im stabilen Betrieb eine Dauerbetriebsregelung mit den folgenden Schritten aufweist:
• Betreiben des Gaslasers (1) zum Abstrahlen von Laserlicht;
• Messen (8, 13) einer Intensität von mindestens einer Komponente des abgestrahlten Laserlichtes;
• Einstellen einer Rohrtemperatur (T2) des Laserrohres (1), so dass die gemessene Intensität auf einen vorgegebenen Sollwert geregelt wird;
**dadurch gekennzeichnet, dass** das Verfahren bei Inbetriebnahme des Gaslasers, d.h. vor dem stabilen Betrieb, eine Inbetriebnahmeregelung mit den folgenden Schritten aufweist:
• Messen (51) einer Umgebungstemperatur (T0;
• Regeln (54, 55, 56) des Zustandes des Laserrohres (1) zumindest annähernd auf einen Sollzustand, wobei der Sollzustand eine Funktion der gemessenen Umgebungstemperatur ist und einer Temperatur des Laserrohres (1) bei der gemessenen Umgebungstemperatur im eingeschwungenen Zustand ohne weitere Heizung oder Kühlung entspricht; und
• Umschalten (56) auf die Dauerbetriebsregelung.

2. Verfahren gemäss Anspruch 1, wobei die Inbetriebnahmeregelung die folgenden Schritte aufweist:
• Messen (51) der Umgebungstemperatur (T0;
• Messen der Rohrtemperatur (T2) des Laserrohres (1);
• Bestimmung (52) eines Regeldifferenzwertes nach Massgabe der Umgebungstemperatur (T0 und der Rohrtemperatur (T2);
• Einstellen (54, 55, 56) der Temperatur (T2) des Gaslasers, so dass der Regeldifferenzwert zumindest annähernd auf Null geregelt wird; und
• Umschalten (56) auf die Dauerbetriebsregelung.

3. Verfahren gemäss Anspruch 2, wobei der Regeldifferenzwert eine Anzahl von Modi des Gaslasers ist, aufweisend den folgenden Schritt zur Bestimmung des Regeldifferenzwertes:
• Bestimmung (52) des Regeldifferenzwertes als Anzahl von zu durchlaufenden Modi zwischen dem Zustand entsprechend der Rohrtemperatur (t2) und dem Sollzustand.

4. Verfahren gemäss Anspruch 3, aufweisend die folgenden Schritte zur Bestimmung (52) des Regeldifferenzwertes:
• Bestimmen der Anzahl von zu durchlaufenden Modi aus einer vorgegebenen Funktion in Abhängigkeit der Umgebungstemperatur (T0);
• falls die Differenz zwischen der Rohrtemperatur (T2) und der Umgebungstemperatur (T0) eine vorgegebene Schwelle überschreitet, Korrektur der Anzahl von zu durchlaufenden Modi nach Massgabe dieser Differenz.

5. Verfahren gemäss Anspruch 3, aufweisend die weiteren Schritte
• Überwachen (57) der Heiz- respektive Kühlleistung während der Dauerbetriebsregelung;
• falls die Heiz- respektive Kühlleistung während einer vorgegebenen Zeitdauer einen vorgegebenen Schwellwert überschreitet (58): erneute Durchführung der Inbetriebnahmeregelung unter Berücksichtigung der Rohrtemperatur (T2).

6. Verfahren gemäss Anspruch 3 oder 4 oder 5, aufweisend die folgenden Schritte:
• Aufheizen (55) des Laserrohres (1) mit einer vorgegebenen maximalen Heizleistung während einer ersten Anzahl von durchlaufenen Modi;
• Aufheizen (56) des Laserrohres (1) mit einer vorgegebenen reduzierten Heizleistung oder Abkühlen des Laserrohres (1) mit einer vorgegebenen Kühlleistung während einer zweiten Anzahl von durchlaufenen Modi.

7. Verfahren gemäss Anspruch 2, wobei der Regeldifferenzwert eine Temperaturdifferenz ist, aufweisend die folgenden Schritte zur Bestimmung des Regeldifferenzwertes:
• Bestimmen der Temperatur des Laserrohres (1) im Sollzustand, nach Massgabe der Umgebungstemperatur (T0);
• Bestimmung (52) des Regeldifferenzwertes als Differenz zwischen der Rohrtemperatur und der Temperatur des Laserrohres (1) im Sollzustand.

8. **Frequenzstabilisierter Gaslaser,** insbesondere zur Verwendung in einem Laser-Interferometer, aufweisend
ein Laserrohr (1) zum Abstrahlen von Laserlicht,
einen Detektor (8) zum Messen einer Intensität von mindestens einer Komponente des abgestrahlten Laserlichtes, und
eine Regelung (7), welche in einem ersten Betriebszustand als Dauerbetriebsregelung ausgebildet ist, bei welcher Dauerbetriebsregelung zur Einstellung einer Rohrtemperatur des Laserrohres (1) die gemessene Intensität auf einen vorgegebenen Sollwert geregelt wird,
**dadurch gekennzeichnet, dass** der Gaslaser ferner aufweist
einen Umgebungstemperatursensor (16) und
eine Vorgabeeinheit (17) ausgebildet zur Bestimmung eines Sollzustandes anhand einer mit dem Umgebungstemperatursensor (16) gemessenen Umgebungstemperatur, wobei der Sollzustand einer Temperatur des Laserrohres (1) bei der gemessenen Umgebungstemperatur im eingeschwungenen Zustand ohne weitere Heizung oder Kühlung entspricht,
und dass die Regelung (7) in einem zweiten Betriebszustand als Inbetriebnahmeregelung ausgebildet ist, bei welcher Inbetriebnahmeregelung der Zustand des Laserrohres (1) zumindest annähernd auf diesen Sollzustand geregelt wird, und anschliessend auf die Dauerbetriebsregelung umgeschaltet wird.

9. Frequenzstabilisierter Gaslaser gemäss Anspruch 8, aufweisend einen Rohrtemperatursensor (14), wobei die Vorgabeeinheit (17) zur Bestimmung eines Regeldifferenzwertes nach Massgabe der Umgebungstemperatur und der Rohrtemperatur ausgebildet ist, und die Regelung (7) im zweiten Betriebszustand zur Einstellung der Temperatur des Gaslasers, so dass der Regeldifferenzwert zumindest annähernd auf Null geregelt wird, ausgebildet ist.

10. Frequenzstabilisierter Gaslaser gemäss Anspruch 9, wobei der Regeldifferenzwert eine Anzahl von zu durchlaufenden Modi des Gaslasers zwischen dem Zustand entsprechend der Rohrtemperatur und dem Sollzustand ist.

11. Frequenzstabilisierter Gaslaser gemäss Anspruch 9, wobei der Regeldifferenzwert eine Temperaturdifferenz zwischen der Rohrtemperatur und der Temperatur des Laserrohres (1) im Sollzustand ist.

## Claims

1. **Method for the frequency stabilisation of a gas laser** with a laser tube (1), in particular for the operation in a laser-interferometer, which during stable operation comprises a continuous operation control with the following steps:
• Operating a gas laser (1) for the radiation of laser light;
• measuring (8, 13) an intensity of at least one component of the radiated laser light;
• adjusting the tube temperature (T2) of the laser tube (1) in such a manner that the measured intensity is controlled to reach a target value;
**characterised in that** the method during the startup of the gas laser, i.e., prior to the steady operation, comprises a startup control system with the following steps:
• Measuring (51) an ambient temperature (T0);
• controlling (54, 55, 56) the state of the laser tube (1) to reach at least approximately a target state, wherein the target state is a function of the measured ambient temperature and corresponds to a temperature of the laser tube (1) at the measured ambient temperature in the steady state without any additional heating or cooling; and
• switching (56) over to the continuous operation control.

2. Method in accordance with claim 1, wherein the startup control procedure comprises the following steps:
• Measuring (51) the ambient temperature (T0);
• measuring the tube temperature (T2) of the laser tube (1);
• determining (52) the actuating control value in accordance with the ambient temperature (T0) and the tube temperature (T2);
• adjusting (54, 55, 56) the temperature (T2) of the gas laser, so that the actuating control value is controlled to reach at least approximately zero; and
• switching (56) over to the continuous operation control.

3. Method in accordance with claim 2, wherein the actuating control value is a number of modes of the gas laser, comprising the following step for determining the actuating control value:
• Determining (52) the actuating control value as the number of modes to be passed through between the state corresponding to the tube temperature (T2) and the target state.

4. Method in accordance with claim 3, comprising the following steps for determining (52) the actuating control value:
• Determining the number of modes to be passed through from a predefined function in dependence of the ambient temperature (T0);
• if the difference between the tube temperature (T02) and the ambient temperature (T0) exceeds a given threshold, correcting the number of modes in accordance with this difference.

5. Method in accordance with claim 3, comprising the further steps:
• Monitoring (57) of the heating power or cooling power during the continuous operation control;
• if the heating power or cooling power during a predetermined period of time exceeds a given threshold value (58): Renewed execution of the startup control procedure, taking into account the tube temperature (T2).

6. Method in accordance with claim 3 or 4 or 5, comprising the following steps:
• Heating (55) the laser tube (1) with a given maximum heating power during a first number of modes passed through;
• heating (56) the laser tube (1) with a predefined reduced heating power or cooling down the laser tube (1) with a predefined cooling power during a second number of modes passed through.

7. Method in accordance with claim 2, wherein the actuating control value is a temperature difference, comprising the following steps for the determination of the actuating control value:
• Determining the temperature of the laser tube (1) in the target state in accordance with the ambient temperature (T0);
• determining (52) the actuating control value as the difference between the tube temperature and the temperature of the laser tube (1) in the target state.

8. **Frequency stabilised gas laser,** in particular for the use in a laser interferometer, comprising
a laser tube (1) for radiating laser light,
a detector (8) for measuring the intensity of at least one component of the radiated laser light, and
a control system (7), which in a first operating state is designed as a continuous operation control system, wherein the measured intensity is controlled to reach a predefined set-point value in order to set of a tube temperature of the laser tube (1),
**characterised in that** the gas laser further comprises
an ambient temperature sensor (16) and
a set point generation unit (17) designed for determining a target state according to an ambient temperature measured by the ambient temperature sensor (16), wherein the target state corresponds to a temperature of the laser tube (1) at the measured ambient temperature in the steady state without any further heating or cooling,
and that the control system (7), in a second operating state, is designed as a startup control system, wherein the state of the laser tube (1) is adjusted at least approximately to this target state, and subsequently is switched over to the continuous operation control.

9. Frequency stabilised gas laser in accordance with claim 8, comprising a tube temperature sensor (14), wherein the set point generation unit (17) is designed for the determination of an actuating control value in accordance with the ambient temperature and the tube temperature, and the control system (7), in the second operating state, is designed for the adjustment of the temperature of the gas laser, so that the actuating control value is controlled to reach at least approximately zero.

10. Frequency stabilised gas laser in accordance with claim 9, wherein the actuating control value is a number of modes to be passed through by the gas laser between the state corresponding to the tube temperature and the target state.

11. Frequency stabilised gas laser in accordance with claim 9, wherein the actuating control value is a temperature difference between the tube temperature and the temperature of the laser tube (1) in the target state.

## Revendications

1. Procédé de stabilisation de la fréquence d'un laser à gaz qui présente un tube laser (1) et en particulier destiné à être utilisé dans un interféromètre à laser qui, en fonctionnement stable, présente une régulation du fonctionnement en régime permanent qui présente les étapes suivantes :
- conduite du laser (1) à gaz pour qu'il émette une lumière laser,
- mesure (8, 13) de l'intensité d'au moins une composante de la lumière laser émise,
- réglage de la température (T2) du tube laser (1) de telle sorte que l'intensité mesurée soit régulée à une valeur de consigne prédéterminée,
**caractérisé en ce que**
lors de la mise en service du laser à gaz, c'est-à-dire avant son fonctionnement stable, le procédé présente une régulation de la mise en service qui présente les étapes suivantes :
- mesure (51) de la température (T0) de l'environnement,
- régulation (54, 55, 56) de l'état du tube laser (1) au moins approximativement à un état de consigne, l'état de consigne étant fonction de la température mesurée de l'environnement et de la température du tube laser (1) à la température mesurée de l'environnement en condition d'équilibre et sans autre chauffage ou refroidissement et
- commutation (56) à la régulation du fonctionnement en régime permanent.

2. Procédé selon la revendication 1, dans lequel la régulation de la mise en service présente les étapes suivantes :
- mesure (51) de la température (T0) de l'environnement,
- mesure de la température (T2) du tube laser (1),
- détermination (52) de la valeur de l'écart de régulation en fonction de la température (T0) de l'environnement et de la température (T2) du tube,
- réglage (54, 55, 56) de la température (T2) du laser à gaz de telle sorte que la valeur d'écart de régulation soit réglée au moins approximativement à zéro et
- commutation (56) à la régulation du fonctionnement en régime permanent.

3. Procédé selon la revendication 2, dans lequel la valeur de l'écart de réglage est un certain nombre de modes du laser à gaz, le procédé présentant l'étape suivante de détermination de la valeur de l'écart de régulation :
- détermination (52) de la valeur de l'écart de régulation en tant que nombre de modes à parcourir entre l'état qui correspond à la température (T2) du tube et l'état de consigne.

4. Procédé selon la revendication 3, qui présente les étapes suivantes de détermination (52) de la valeur de l'écart de régulation :
- détermination du nombre des modes à parcourir depuis une fonction prédéterminée qui dépend de la température (T0) de l'environnement,
- au cas où la différence entre la température (T2) du tube et la température (T0) de l'environnement dépasse un seuil prédéterminé, correction en fonction de cette différence du nombre des modes à parcourir.

5. Procédé selon la revendication 3, présentant les étapes supplémentaires qui consistent à :
- surveiller (57) la puissance de chauffage ou de refroidissement pendant la régulation du fonctionnement en régime permanent,
- au cas où la capacité de chauffage ou de refroidissement pendant une durée prédéterminée dépasse (58) une valeur de seuil prédéterminée, nouvelle exécution de la régulation de mise en service en tenant compte de la température (T2) du tube.

6. Procédé selon les revendications 3, 4 ou 5, présentant les étapes suivantes :
- chauffage (55) du tube laser (1) à une puissance maximale de chauffage prédéterminée pendant un premier nombre de modes à parcourir,
- chauffage (56) du tube laser (1) à une puissance de chauffage réduite prédéterminée ou refroidissement du tube laser (1) à une puissance de refroidissement prédéterminée pendant un deuxième nombre de modes à parcourir.

7. Procédé selon la revendication 2, dans lequel la valeur de l'écart de régulation est une différence de température, et présentant les étapes suivantes de détermination de la valeur de l'écart de régulation :
- détermination de la température du tube laser (1) à l'état de consigne en fonction de la température (T0) de l'environnement et
- détermination (52) de la valeur de l'écart de régulation en tant que différence entre la température du tube et la température du tube laser (1) à l'état de consigne.

8. Laser à gaz stabilisé en fréquence, destiné en particulier à être utilisé dans un interféromètre à laser et présentant :
un tube laser (1) destiné à émettre la lumière laser,
un détecteur (8) qui mesure l'intensité d'au moins une composante de la lumière laser émise et
une régulation (7) qui, dans un premier état de fonctionnement, est configurée comme régulation du fonctionnement en régime permanent qui régule à une valeur de consigne prédéterminée l'intensité mesurée pour régler la température du tube laser (1),
**caractérisé en ce que**
le laser à gaz présente en outre :
un détecteur (16) de température de l'environnement et
une unité de commande (17) configurée pour déterminer l'état de consigne à l'aide de la température de l'environnement mesurée à l'aide du détecteur (16) de température de l'environnement, l'état de consigne correspondant à une température du tube laser (1) à la température de l'environnement mesurée et en condition d'équilibre sans autre chauffage ni refroidissement, et
**en ce que** dans un deuxième état de fonctionnement, la régulation (7) est configurée comme régulation de mise en service, la régulation de mise en service régulant l'état du tube laser (1) au moins approximativement à cet état de consigne et étant ensuite commutée sur la régulation en fonctionnement en régime permanent.

9. Laser à gaz stabilisé en fréquence selon la revendication 8, présentant un détecteur (14) de température du tube, l'unité de commande (17) étant configurée pour déterminer la valeur de l'écart de régulation en fonction de la température de l'environnement et de la température du tube, la régulation (7) étant configurée dans le deuxième état de fonctionnement pour régler la température du laser à gaz de telle sorte que la valeur de l'écart de régulation soit régulée au moins approximativement à zéro.

10. Laser à gaz stabilisé en fréquence selon la revendication 9, dans lequel la valeur de l'écart de régulation est un certain nombre de modes à parcourir par le laser à gaz entre l'état qui correspond à la température du tube et l'état de consigne.

11. Laser à gaz stabilisé en fréquence selon la revendication 9, dans lequel la valeur de l'écart de régulation est la différence entre la température du tube et la température du tube laser (1).
